**Europäisches Patentamt**

**European Patent Office**

**Office européen des brevets**

(19)

(11) Veröffentlichungsnummer: **0 170 712**

**B1**

(12) # EUROPÄISCHE PATENTSCHRIFT

(45) Veröffentlichungstag der Patentschrift:
**31.05.89**

(51) Int. Cl.⁴: **G 09 F 3/02, C 09 J 7/02**

(21) Anmeldenummer: **84109348.7**

(22) Anmeldetag: **07.08.84**

(54) **Sicherheitsaufkleber.**

(43) Veröffentlichungstag der Anmeldung:
**12.02.86 Patentblatt 86/7**

(45) Bekanntmachung des Hinweises auf die Patenterteilung:
**31.05.89 Patentblatt 89/22**

(84) Benannte Vertragsstaaten:
**AT BE CH FR GB IT LI NL SE**

(56) Entgegenhaltungen:
**FR-A-1 486 673**
**FR-A-2 445 568**
**US-A-3 925 584**

(73) Patentinhaber: **Dudzik, Joachim, Vor dem Klingler 1, D-7440 Nürtingen (DE)**
Patentinhaber: **Dudzik, Winfried, Drosselweg 13, D-7441 Neckartailfingen (DE)**

(72) Erfinder: **Spindler, Heinz, Bayernstrasse 15, D-7910 Neu- Ulm (DE)**

(74) Vertreter: **Wolf, Eckhard, Dr.- Ing., Eugensplatz 5 Postfach 13 10 01, D-7000 Stuttgart 1 (DE)**

EP 0 170 712 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft einen Sicherheitsaufkleber zum Etikettieren oder Versiegeln von Magnetbandkassetten. Verpackungen, Geräten, Bauteilen und dergl. bestehend aus einer einseitig mit einer Kleberbeschichtung versehenen transparenten Grundfolie, die eine Zwischenschicht trägt, wobei die Haftfähigkeit zwischen der Grundfolie und der Zwischenschicht in Teilbereichen vermindert ist, und aus einer einseitig mit einer Klebstoffschicht versehenen Deckfolie auf der der Kleberbeschichtung abgewandten Seite der Grundfolie.

Derartige Sicherheitsaufkleber sind bekannt und weisen zunächst im erstmaligen verklebten Zustand gewöhnlich eine gleichmäßige Einfärbung auf, wobei die Zwischenschicht bevorzugt als metallisch glänzende Bedampfung ausgebildet ist. Beim Abziehen des verklebten Sicherheitsaufklebers verbleibt in den Teilbereichen großer Haftwirkung die Zwischenschicht mit der Kleberbeschichtung an der Grundfolie, während in den Teilbereichen mit verminderter Haftwirkung die Zwischenschicht und die Kleberbeschichtung sich von der Grundfolie lösen und an der beklebten Fläche haften bleiben. Auf diese Weise tritt ein flächenhaftes Aufspalten der Zwischenschicht auf, das durch deren Farbgebung bzw. metallischen Glanz deutlich erkennbar wird. Die Teilbereiche können insbesondere von einem Schriftzug gebildet oder graphisch gestaltet sein, so daß durch das Abziehen des Sicherheitsaufklebers sichtbar und kenntlich wird, daß eine beispielsweise versiegelte Verpackung geöffnet worden ist.

Diese Sicherheitsaufkleber besitzen jedoch den Nachteil, daß die Grundfolie sich mit etwas Geschick paßgenau zurückkleben läßt, daß also die Teilbereiche nahtlos nieder aneinander angrenzen und der Sicherheitsaufkleber den Eindruck erweckt, sich noch in seinem ursprünglichen, erstmalig verklebten Zustand zu befinden. Ferner lassen sich diese Sicherheitsaufkleber, bedingt durch die Klebereigenschaften, bei erhöhter Temperatur vollständig, d. h. ohne Aufspaltung der Zwischenschicht ablösen, was die Möglichkeit unbefugten Entfernens noch erleichtert, weil die Schwierigkeit des paßgenauen Rückklebens entfällt. Schließlich kann der nach Ablösen der Grundfolie auf der beklebten Fläche verbleibende Rückstand einfach durch eine entsprechend gefärbte oder metallisierte Standardfolie überklebt werden, so daß der Eindruck einer unbeschädigten Grundfolie erweckt wird. Ein auf der Oberfläche der Grundfolie gegebenenfalls angebrachter Aufdruck kann dabei unter Umständen gefälscht werden.

Der Erfindung liegt die Aufgabe zugrunde, einen Sicherheitsaufkleber der eingangs genannten Art so auszubilden, daß bereits Ablöseversuche erkennbar werden und daß nach einmaligem Ablösen ein Rückkleben nicht möglich ist, ohne daß deutliche Spuren am Sicherheitsaufkleber das erfolgte Ablösen kennzeichnen.

Diese Aufgabe wird dadurch gelöst, daß die Deckfolie mit ihrer Klebstoffschicht auf die Grundfolie auflaminiert ist, daß ferner die Deckfolie unter Zugbelastung irreversibel dehnbar und/oder leicht brechend ausgebildet ist, daß die Zwischenschicht auf der zur Kleberbeschichtung weisenden Seite der Grundfolie angeordnet ist, und daß die umfangsseitig über die Grundfolie vorstehende Deckfolie einen Sicherheitsrand bildet.

Der durch die Erfindung erreichte Fortschritt besteht im wesentlichen darin, daß die Grundfolie nicht unmittelbar zugänglich, sondern durch die Deckfolie gegen Manipulationen gesichert ist. Insbesondere der Sicherheitsrand erschwert den Zugang zur Grundfolie, da zunächst die Deckfolie im Bereich des Sicherheitsrandes zu lösen ist. Dabei wird die Deckfolie meist zumindest teilweise in ihrem Randbereich ausbrechen und somit das erfolgte Ablösen kenntlich machen. Gelingt es jedoch, den Sicherheitsrand zerstörungsfrei zu lösen, so daß die Deckfolie gemeinsam mit der Grundfolie unter Aufspaltung der Zwischenschicht von der beklebten Fläche abgezogen werden kann, so wird dies entweder an der anschließend brüchigen Struktur der Deckfolie erkennbar oder auch daran, daß die Grundfolie wegen der mit ihr verbundenen und gedehnten Deckfolie im rückgeklebten Zustand nicht mehr paßgenau ist.

Im übrigen ist es zweckmäßig, wenn die Deckfolie lichtbrechende Eigenschaften aufweist. Zum einen können dadurch mechanische Beanspruchungen der Deckfolie unmittelbar sichtbar werden und zum anderen wird wegen der schwierigen Beschaffungsmöglichkeit solcher Folien der Versuch erschwert, die Deckfolie von der Grundfolie zu trennen und beim Rückkleben eine neue Deckfolie vorzusehen. Diese Eigenschaften können insbesondere dann vorteilhaft ausgenutzt werden, wenn die Deckfolie aus Acrylat oder gegossenem Vinyl vorzugsweise in Form eines Laminats aus mehreren dünnen Einzelfolien besteht, die aufgrund von Interferenzfarben (Farben dünner Plättchen) eine unter Lichtanfall irisierende Oberflächenerscheinung besitzt.

Um einen Austausch der Deckfolie weiter zu erschweren, kann die Deckfolie mit einem bei sichtbarem Licht und/oder einem nur unter ultraviolettem Licht erkennbaren Sicherheitsaufdruck versehen sein. Erstreckt sich dieser Aufdruck bis in den Sicherheitsrand hinein, so werden Beschädigungen und insbesondere auch den Sicherheitsrand schmälernde Beschneidungen zur Beseitigung aufgetretener Beschädigungen am Rand ohne weiteres erkennbar. Schließlich ist es von Vorteil, wenn mindestens einer der Aufdrucke ein in Längs- und Querrichtung geradliniges Raster aufweist, das Dehnungen der Deckfolie, die durch deren Ablösung entstanden sind, unmittelbar erkennbar macht.

Im folgenden wird die Erfindung anhand der in der Zeichnung dargestellten Ausführungsbeispiele näher erläutert. Es zeigen:

Fig. 1 eine Draufsicht auf einen Sicherheitsaufkleber,

Fig. 2 einen Schnitt durch den Gegenstand nach Fig. 1 in Richtung II - II,

Fig. 3 den Gegenstand nach Fig. 2 in einer zweiten Ausführungsform,

Fig. 4 den Gegenstand nach Fig. 2 in einer dritten Ausführungsform.

Der in der Zeichnung dargestellte Sicherheitsaufkleber besteht aus einer mit einer Kleberbeschichtung 1 versehenen Grundfolie 2 sowie einer mit einer Klebstoffschicht 3 versehenen Deckfolie 4, die auf die Grundfolie 2 auf ihrer der Kleberbeschichtung 1 abgewandten Seite auflaminiert ist. Zwischen der Kleberbeschichtung 1 und der Grundfolie 2 ist eine Zwischenschicht 9 vorgesehen, die von einer metallisch glänzenden Bedampfung, einer farbigen Markierungszone oder dergl. gebildet sein kann.

Die Deckfolie 4 besteht aus einem leicht brechenden und irreversibel dehnbaren Material und besitzt darüber hinaus lichtbrechende bzw. lichtbeugende, in Interferenzfarben irisierende Eigenschaften. Als geeignetes Material bietet sich dafür ein Acrylat oder gegossenes Vinyl an in Form eines Laminats aus mehreren dünnen Einzelfolien. Die Deckfolie 4 steht umfangseitig über die Grundfolie 2 vor und bildet auf diese Weise einen Sicherheitsrand 7. Dieser Sicherheitsrand 7 läßt sich im aufgeklebten Zustand praktisch nicht zerstörungsfrei lösen, da die Deckfolie 4 im Bereich des Sicherheitsrandes 7 beim Ablösen brüchig wird und dadurch den Ablöseversuch erkennbar macht. Sollte es dennoch gelingen, die Deckfolie 4 im Bereich des Sicherheitsrandes vollständig und unbeschädigt zu lösen, so teilt sich bei weiterem Abziehen des Sicherheitsaufklebers die Zwischenschicht 9, da in den Bereichen großer Haftfähigkeit zur Grundfolie 2 die Zwischenschicht gegebenenfalls einschließlich der Kleberbeschichtung 1 von der beklebten Fläche abgezogen wird, während in den übrigen Bereichen verminderter Haftfähigkeit die Kleberbeschichtung 1 mit der Zwischenschicht 9 im aufgeklebten Zustand verharrt, d. h. sich von der Grundfolie löst. Somit bilden die zunächst nicht oder kaum erkennbaren Teilbereiche 6 im abgelösten Zustand ein Bild, das die Form eines Schriftzuges oder eine sonstige graphische Gestalt aufweisen kann und die erfolgte Ablösung signalisiert. Ein paßgenaues Rückkleben ist nicht möglich, da die Deckfolie 4 beim Abziehen eine Dehnung erfährt und dadurch die Grundfolie 2 ebenfalls verformt, so daß die durch das Abziehen entstandenen positiven und negativen Bilder der Zwischenschicht nicht mehr zueinander passen.

Das vollständige Ablösen der Grundfolie 2 mit der gesamten Kleberbeschichtung 1 durch Temperaturerhöhung ist ebenfalls ausgeschlossen, da die Deckfolie 4 nur eine geringe Temperaturstabilität besitzt, d. h. bei der erforderlichen Temperatur bereits pastös und daher gegen Beschädigungen empfindlichen wird und somit den Ablöseversuch wiederum kenntlich macht.

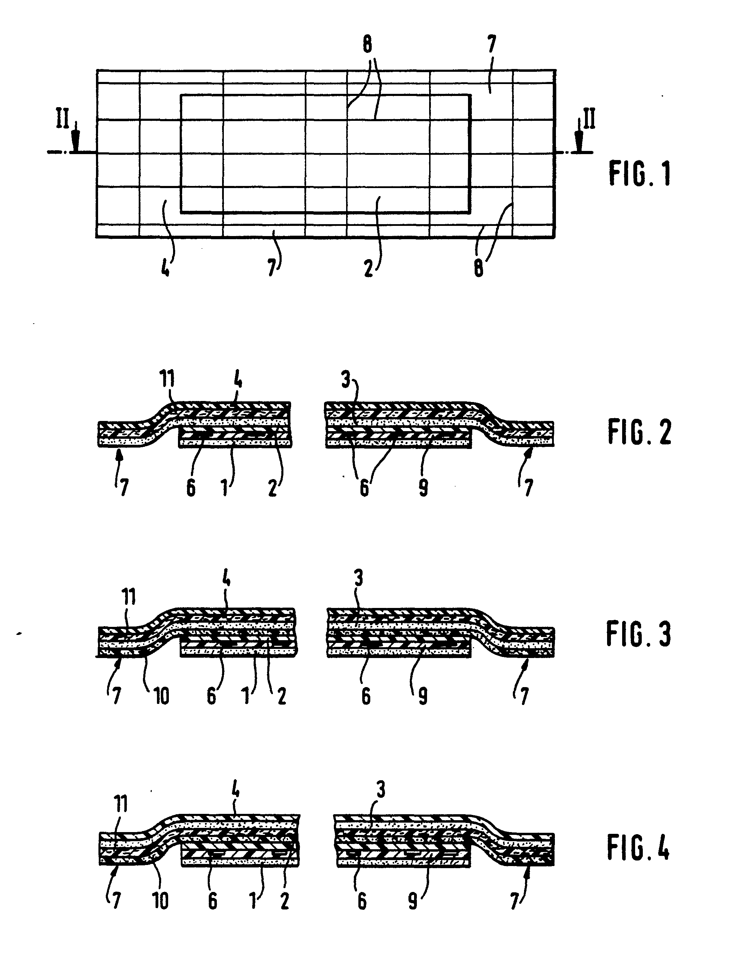

Schließlich kann die Deckfolie 4 mit einem oder mehreren kunden- oder herstellerspezifischen Sicherheitsaufdrucken 10, 11 versehen sein, die, wie mit 10 bezeichnet, bei sichtbarem Licht und/oder, wie mit 11 bezeichnet, nur unter UV-Licht erkennbar sind. Diese Aufdrucke können gemäß den Figuren 2 bis 4 entweder in die Deckfolie 4 direkt, vorzugsweise von der Seite der Klebstoffschicht 3 her, oder auch in die Klebstoffschicht 3 eingebracht sein. Dadurch wird die Möglichkeit ausgeschlossen, die Deckfolie 4 am Sicherheitsrand 7 zu lösen und den Versuch zu unternehmen, die Deckfolie 4 von der Grundfolie 2 zu trennen, um dann einen allein auf die Grundfolie 2 beschränkten weiteren Ablöseversuch durchzuführen und nach deren Rückkleben für die zuvor beim Ablösen am Sicherheitsrand 7 beschädigte Deckfolie 4 eine neue, unter Umständen im Handel erhältliche Folie aufzubringen. Enthält der Aufdruck zudem ein geradliniges Raster 8 etwa in der in Fig. 1 dargestellten Weise, so werden Dehnungen der Deckfolie, wie sie beim Ablösen auftreten, unmittelbar erkennbar. Für die Klebstoffschicht 3 empfiehlt sich im übrigen ein rein synthetischer Acryl-Kleber, der entsprechend der Deckfolie 4 eine hinreichende Widerstandsfähigkeit gegen Lösungsmittel aufweist. Schließlich kann die Sicherheitsfolie, wie in Fig. 1, rechteckig ausgebildet, gegebenenfalls mit abgerundeten Ecken versehen sein, oder auch runde bzw. spezielle Form aufweisen.

**Patentansprüche**

1. Sicherheitsaufkleber zum Etikettieren, Versiegeln o. ä. von Magnetband-Kassetten, Verpackungen, Geräten, Bauteilen und dergl., bestehend aus einer einseitig mit einer Kleberbeschichtung (1) versehenen transparenten Grundfolie (2), die eine Zwischenschicht (9) trägt, wobei die Haftfähigkeit zwischen der Grundfolie (2) und der Zwischenschicht (9) in Teilbereichen vermindert und aus einer einseitig mit einer Klebstoffschicht (3) versehenen Deckfolie (4) auf der Kleberbeschichtung (1) abgewandten Seite der Grundfolie (2), dadurch gekennzeichnet, daß die Deckfolie (4) mit ihrer Klebstoffschicht (3) auf die Grundfolie (2) auflaminiert ist, daß ferner die Deckfolie (4) unter Zugbelastung irreversibel dehnbar und/oder leicht brechend ausgebildet ist, daß die Zwischenschicht (9) auf der zur Kleberbeschichtung (1) weisenden Seite der Grundfolie (2) angeordnet ist, und daß die umfangsseitig über die Grundfolie (2) vorstehende Deckfolie (4) einen Sicherheitsrand (7) bildet.

2. Sicherheitsaufkleber nach Anspruch 1, dadurch gekennzeichnet, daß die Deckfolie (4) lichtbrechende oder lichtbeugende, Interferenzfarben bildende Eigenschaften aufweist.

3. Sicherheitsaufkleber nach Anspruch 1 oder 2, dadurch gekennzeichnet, daß die Deckfolie (4) aus Acrylat oder gegossenem Vinyl besteht.

4. Sicherheitsaufkleber nach einem der Ansprüche 1 bis 3, dadurch gekennzeichnet, daß die Deckfolie (4) mit einem bei sichtbarem und/oder einem nur unter ultraviolettem Licht erkennbaren Sicherheitsaufdruck versehen ist.

5. Sicherheitsfolie nach Anspruch 4, dadurch gekennzeichnet, daß mindestens einer der Aufdrucke ein in Längs- und Querrichtung geradliniges Raster (8) aufweist.

## Claims

1. Security tape for labelling, sealing, or similar, magnetic tape cassettes, wrappers, equipment, component parts and the like, comprising a transparent backing sheet (2) provided on one side with an adhesive coating (1) and bearing an intermediate layer (9), the adhesiveness between the backing sheet (2) and the intermediate layer (9) being reduced in some areas, and further comprising, on the side of the backing sheet (2) that is remote from the adhesive coating (1), a top sheet (4) provided with a layer of adhesive (3) on one side, characterised in that the top sheet (4) with its layer of adhesive (3) is laminated onto the backing sheet (2), that in addition the top sheet (4) is designed to stretch irreversibly under tensile strain and/or to break easily, that the intermediate layer (9) is disposed on the side of the backing sheet (2) that faces the adhesive coating (1), and that the top sheet (4), which projects beyond the backing sheet (2) at the periphery, forms a security margin (7).

2. Security tape according to Claim 1, characterised in that the top sheet (4) has refractive or diffracting properties, producing interference colours.

3. Security tape according to Claim 1 or 2, characterised in that the top sheet (4) is made of acrylate or cast vinyl.

4. Security tape according to one of Claims 1 to 3, characterised in that the top sheet (4) is provided with a security overprint that can be detected in visible light and/or only under ultraviolet light.

5. Security tape according to Claim 4, characterised in that at least one of the overprints incorporates a rectilinear grid (8) running longitudinally and transversely.

## Revendications

1. Etiquette de sécurité pour l'étiquetage, le scellement, etc. de cassettes de bandes magnétiques, d'emballages, d'appareils, de composants ou analogues, composée d'une feuille de base transparente (2) munie unilatéralement d'un enduit de colle (1) et portant une couche intermédiaire (9), l'adhésiviti entre la feuille de base (2) et la couche intermédiaire (9) étant réduite dans des zones partielles, et d'une feuille de recouvrement (4) munie unilatéralement d'une couche de colle (3) du côté opposé à l'enduit de colle (1) de la feuille de base (2), caractérisée en ce que la feuille de recouvrement (4) est laminée, avec sa couche de colle (3), sur la feuille de base (2), que, en plus, la feuille de recouvrement (4) est réalisée, sous contrainte de traction, de façon à être irréversiblement extensible et/ou facilement cassante, que la couche intermédiaire (9) est disposée sur la face de la feuille de base (2) dirigée vers l'enduit de colle (1), et que la feuille de recouvrement (4) dépassant de la périphérie de la feuille de base (2) constitue un bord de sécurité (7).

2. Etiquette de sécurité selon la revendication 1, caractérisée en ce que la feuille de recouvrement (4) présente des propriétés de réfraction ou de diffraction de la lumière et des reflets irisés en couleurs de lames minces.

3. Etiquette de sécurité selon l'une des revendications 1 ou 2, caractérisée en ce que la feuille de recouvrement (4) est réalisée en acrylate ou en vinyle coulé.

4. Etiquette de sécurité selon l'une quelconque des revendications 1 à 3, caractérisée en ce que la feuille de recouvrement (4) est munie d'une impression de sécurité reconnaissable à la lumière visible et/ou d'une impression de sécurité reconnaissable seulement à la lumière ultraviolette.

5. Etiquette de sécurité selon la revendication 4, caractérisée en ce qu'au moins l'une des impressions comporte un quadrillage (8) rectiligne dans les sens longitudinal et transversal.

EP 0 170 712 B1

**FIG. 1**

**FIG. 2**

**FIG. 3**

**FIG. 4**

1